# EUROPEAN PATENT APPLICATION

(11) **EP 4 446 805 A1**
(43) Date of publication of application: **16.10.2024**
(21) Application number: 23742857.8
(22) Date of filing: 16.01.2023
(51) Int. Cl.: G02F 1/1335, F21V 9/14, G02B 5/30

(54) **POLARIZATION GRATING DEVICE AND LIQUID CRYSTAL DISPLAY**

(30) Priority: 19.01.2022 CN 202210062307
(71) Applicant: Huawei Technologies Co., Ltd., Shenzhen, Guangdong 518129 (CN)
(72) Inventor: CHANG, Yiwen, Shenzhen, Guangdong 518129 (CN); FAN, Fan, Shenzhen, Guangdong 518129 (CN); ZHAO, Chenxiang, Shenzhen, Guangdong 518129 (CN)
(74) Representative: Gill Jennings & Every LLP
(86) International application number: PCT/CN2023/072445
(87) International publication number: WO 2023/138542

(57) **Abstract**

A polarization grating apparatus and a liquid crystal display are provided. The polarization grating apparatus includes a lens assembly (31), a polarization grating assembly (32), and a phase control assembly (33) that are sequentially stacked. The lens assembly (31) includes a first substrate (311) and a plurality of lenses (312) fastened on a same surface of the first substrate (311), the lens assembly (31) is configured to receive backlight (L1), and each lens (312) is configured to guide a part of the backlight (L1) to the polarization grating assembly (32); the polarization grating assembly (32) is configured to convert the backlight (L1) into left-handed circularly polarized light (L11) and right-handed circularly polarized light (L12) for emission; and the phase control assembly (33) is configured to receive the left-handed circularly polarized light (L11) and the right-handed circularly polarized light (L12), and is configured to convert the left-handed circularly polarized light (L11) and the right-handed circularly polarized light (L12) into light source light (L2) for emission.

## Description

### CROSS-REFERENCE TO RELATED APPLICATIONS

This application claims priority to Chinese Patent Application No. 202210062307.9, filed on January 19, 2022 and entitled "POLARIZATION GRATING APPARATUS AND LIQUID CRYSTAL DISPLAY", which is incorporated herein by reference in its entirety.

### TECHNICAL FIELD

This application relates to the field of display technologies, and in particular, to a polarization grating apparatus and a liquid crystal display in which the polarization grating apparatus is used.

### BACKGROUND

A conventional liquid crystal display includes a backlight module and a display module, and the display module is configured to display an image based on backlight emitted by the backlight module. Only a part of the backlight in a target polarization direction may be used to display the image. Therefore, the liquid crystal display usually further includes a polarizing film located between the backlight module and the display module. The polarizing film is configured to: transmit the backlight in the target polarization direction and absorb backlight in a non-target polarization direction. Consequently, a partial loss of the backlight is caused, and utilization of the backlight is low.

In a conventional technology, a polarization grating (Polarization Grating, PG) film is used to replace the foregoing polarizing film, to improve the utilization of the backlight. However, it is difficult for the existing PG film to be applicable to a case in which backlight is wide in spectrum or backlight is divergent.

### SUMMARY

A first aspect of this application provides a polarization grating apparatus, including a lens assembly, a polarization grating assembly, and a phase control assembly that are sequentially stacked, where
the lens assembly includes a first substrate and a plurality of lenses fastened on a same surface of the first substrate, the lens assembly is configured to receive backlight, and each lens is configured to guide a part of the backlight to the polarization grating assembly;
the polarization grating assembly is configured to: convert the backlight into left-handed circularly polarized light and right-handed circularly polarized light for emission; and
the phase control assembly is configured to receive the left-handed circularly polarized light and the right-handed circularly polarized light, and is configured to convert the left-handed circularly polarized light and the right-handed circularly polarized light into light source light for emission.

The polarization grating apparatus may modulate at least one part of the backlight into a target form of light source light. When the polarization grating apparatus is used in a corresponding device (for example, a liquid crystal display or a radar), light utilization of the backlight is improved.

In addition, the polarization grating apparatus in this embodiment further includes the lens assembly. By using a convergence function of the lens assembly on the backlight, even if a divergence angle of the backlight is large (that is, non-collimation), the backlight can be accurately guided to a specific region on the polarization grating assembly. This helps reduce a light loss of the backlight and further improves the light utilization of the backlight.

Further, the polarization grating apparatus in this embodiment further includes the first substrate. The first substrate helps improve overall mechanical strength of the polarization grating apparatus. A refractive index of each substrate is properly set, so that the utilization of the backlight can be further improved.

In some embodiments, the plurality of lenses are respectively configured to guide the backlight to different regions on the polarization grating assembly.

Because not all regions of the polarization grating assembly can convert the backlight, the backlight may be separately guided, by using the plurality of lenses, to each region that is on the polarization grating assembly and that can convert the backlight. This helps improve the light utilization of the backlight.

In some embodiments, each lens is in a strip shape, and the plurality of lenses are arranged parallel to each other in a first direction.

In some embodiments, the plurality of lenses are arranged into a lens array including a plurality of rows and a plurality of columns.

In some embodiments, the polarization grating assembly includes a polarization grating layer, the polarization grating layer includes a plurality of liquid crystal molecules, and at least some of the plurality of liquid crystal molecules have different deflection angles, so that the polarization grating layer is configured to: convert the backlight into the left-handed circularly polarized light and the right-handed circularly polarized light for emission.

Natural light may be considered as a combination of circularly polarized light in two orthogonal directions. Backlight of the natural light is first converted into the left-handed circularly polarized light and the right-handed circularly polarized light by using the polarization grating layer, so that the left-handed circularly polarized light and the right-handed circularly polarized light can be subsequently converted into light source light of linearly polarized light through phase delay.

In some embodiments, the polarization grating layer includes a plurality of polarization regions, each lens corresponds to one of the polarization regions, each lens is configured to guide a part of the backlight to the corresponding polarization region, and each polarization region is configured to: convert the received backlight into the left-handed circularly polarized light and the right-handed circularly polarized light for emission.

In some embodiments, a projection of each lens on the polarization grating layer at least partially overlaps the corresponding polarization region.

In other words, a pair of lens and a polarization region that correspond to each other are in a spatially opposite relationship, so that the lens guides the backlight to the corresponding polarization region.

In some embodiments, the plurality of polarization regions include a plurality of first polarization regions and a plurality of second polarization regions, a direction of left-handed circularly polarized light emitted from each first polarization region is different from a direction of left-handed circularly polarized light emitted from each second polarization region, and a direction of right-handed circularly polarized light emitted from each first polarization region is different from a direction of right-handed circularly polarized light emitted from each second polarization region.

In this way, optical paths of the left-handed circularly polarized light and the right-handed circularly polarized light are separated by using the first polarization region and the second polarization region, so that phase delay is separately performed on the left-handed circularly polarized light and the right-handed circularly polarized light subsequently.

In some embodiments, the direction of the left-handed circularly polarized light emitted from each first polarization region is the same as the direction of the right-handed circularly polarized light emitted from each second polarization region, and the direction of the right-handed circularly polarized light emitted from each first polarization region is the same as the direction of the left-handed circularly polarized light emitted from each second polarization region.

In this way, regions that are on the phase control assembly and that are configured to separately receive the left-handed circularly polarized light and the right-handed circularly polarized light are distributed regularly, thereby simplifying a manufacturing process. This also helps avoid a case in which the optical paths intersect in a propagation process of the left-handed circularly polarized light and the right-handed circularly polarized light.

In some embodiments, a deflection angle distribution rule of liquid crystal molecules in each first polarization region is different from a deflection angle distribution rule of liquid crystal molecules in each second polarization region.

In this way, the left-handed circularly polarized light and the right-handed circularly polarized light can be separately emitted from the first polarization region and the second polarization region.

In some embodiments, the polarization grating layer includes a plurality of polarization sublayers that are sequentially stacked, each polarization sublayer includes a plurality of polarization regions, each polarization sublayer is configured to convert the backlight into the left-handed circularly polarized light and the right-handed circularly polarized light, and
a deflection angle distribution rule of liquid crystal molecules at each polarization sublayer is different.

The polarization grating layer is disposed to be of a multi-layer structure (including the plurality of polarization sublayers), which helps improve overall polarization state conversion efficiency of the backlight when a wavelength range of the backlight is large.

In some embodiments, the polarization grating layer includes a first polarization sublayer, a second polarization sublayer, and a third polarization sublayer that are sequentially stacked; and
the first polarization sublayer is configured to: convert the backlight within a red light wavelength range into the left-handed circularly polarized light and the right-handed circularly polarized light for emission; the second polarization sublayer is configured to: convert the backlight within a green light wavelength range into the left-handed circularly polarized light and the right-handed circularly polarized light for emission; and the third polarization sublayer is configured to: convert the backlight within a blue light wavelength range into the left-handed circularly polarized light and the right-handed circularly polarized light for emission.

The light source light is used to display an image. The image is mainly modulated by using light of three bands: red, green, and blue. Therefore, when the first polarization sublayer, the second polarization sublayer, and the third polarization sublayer respectively act on the light of the three bands: red, green, and blue, image display is facilitated.

In some embodiments, the polarization grating layer and the plurality of lenses are respectively located on two opposite surfaces of the first substrate.

In this way, a quantity of substrates is reduced, and a thickness of the entire polarization grating apparatus is reduced.

In some embodiments, the polarization grating assembly includes a second substrate and a third substrate; the polarization grating layer is located between the second substrate and the third substrate, so that the polarization grating layer is fastened and supported; and the second substrate is fastened to the first substrate.

In this way, the polarization grating layer and the lens do not need to be separately disposed on different surfaces of a same substrate, which helps simplify a manufacturing process.

In some embodiments, the phase control assembly includes a phase control layer; and
the phase control layer is configured to: perform phase delay on the left-handed circularly polarized light or the right-handed circularly polarized light to convert the light into the light source light for emission.

In some embodiments, the phase control layer is a wave plate.

The wave plate is a fixed patterned structure, and the phase control layer is the wave plate. This helps simplify a manufacturing process.

In some embodiments, the phase control layer is a liquid crystal layer including a plurality of liquid crystal molecules.

In some embodiments, the phase control layer includes a plurality of first phase control regions and a plurality of second phase control regions, each first phase control region is configured to receive the left-handed circularly polarized light, each second phase control region is configured to receive the right-handed circularly polarized light, and the first phase control region and the second phase control region are configured to perform different phase delay on the received light.

In some embodiments, when the phase control layer is the liquid crystal layer, a polarization state of the light source light emitted from each first phase control region and each second phase control region is adjustable.

In some embodiments, the phase control assembly further includes the fourth substrate and the fifth substrate, and the phase control layer is located between the fourth substrate and the fifth substrate; and
a drive circuit is disposed on a surface that is of the fourth substrate and/or the fifth substrate and that is close to the phase control layer, and the drive circuit is configured to drive the plurality of liquid crystal molecules in the phase control layer to deflect, to change a polarization direction of at least one part of the light source light.

When the polarization grating apparatus is used in a liquid crystal display, an image displayed by the liquid crystal display may have a "bright region" and a "dark region". Generally, when a bright-dark contrast of the image is obvious, a contrast of the image is improved, and display effect is better. However, the liquid crystal display may have a problem such as light leakage, which reduces the contrast of the displayed image. In this embodiment, an amount of light source light that is incident from the phase control assembly to the liquid crystal display may be controlled, to cooperate with the "bright region" and the "dark region" of the image displayed by the liquid crystal display. For example, in a region that is of the phase control assembly and that corresponds to the "bright region" of the image, a polarization direction of light source light is controlled to be parallel to a polarization direction of a lower polarizer in the liquid crystal display, so that much light source light is transmitted to the liquid crystal display. In a region that is of the phase control assembly and that corresponds to the "dark region" of the image, a polarization direction of light source light is controlled to be perpendicular to the polarization direction of the lower polarizer, to prevent the light source light from being transmitted to the liquid crystal display. Therefore, the phase control layer is disposed as the liquid crystal layer, and phase delay performed by the phase control layer on light is adjustable through adjustment of deflection of liquid crystal molecules. This helps improve the contrast of the image displayed by the liquid crystal display.

In some embodiments, the light source light is linearly polarized light.

When the polarization grating apparatus is used in the liquid crystal display, it is conducive to penetrating the lower polarizer of the liquid crystal display. In this way, almost all light source light (there may be a light loss caused by another factor rather than caused by different polarization directions) can be transmitted from the lower polarizer, thereby improving the light utilization of the backlight.

A second aspect of this application provides a liquid crystal display, including:
a backlight module, configured to emit backlight;
a polarization grating apparatus, located in an optical path of the backlight, where the polarization grating apparatus is according to any one of the foregoing embodiments, and light source light is a linearly polarized light; and
a liquid crystal display panel, located on an optical path of the light source light, and configured to modulate the light source light based on an image signal to display an image.

In the liquid crystal display, at least one part of the backlight is modulated into linearly polarized light. When the polarization grating apparatus is used in the liquid crystal display, it is conducive to penetrating a lower polarizer of the liquid crystal display. In this way, almost all light source light (there may be a light loss caused by another factor rather than caused by different polarization directions) can be transmitted from the lower polarizer, thereby improving light utilization of the backlight.

In addition, the polarization grating apparatus in this embodiment further includes the lens assembly. By using a convergence function of the lens assembly on the backlight, even if a divergence angle of the backlight is large (that is, non-collimation), the backlight can be accurately guided to a specific region on the polarization grating assembly. This helps reduce a light loss of the backlight and further improves the light utilization of the backlight.

Further, the polarization grating apparatus in this embodiment further includes the first substrate. The first substrate helps improve overall mechanical strength of the polarization grating apparatus. The refractive index of each substrate is set to be within the foregoing range, which helps further improve the utilization of the backlight.

In some embodiments, the liquid crystal display panel includes the lower polarizer, and a polarization direction of at least one part of the light source light is parallel to a polarization direction of the lower polarizer;
a polarization direction of at least one part of the light source light is perpendicular to a polarization direction of the lower polarizer; or
a polarization direction of at least one part of the light source light and a polarization direction of the lower polarizer form an acute angle.

In this way, a "dark region" and a "bright region" of the image can be matched, which helps improve a contrast of the image.

In some embodiments, the phase control assembly further includes a fourth substrate and a fifth substrate, and a phase control layer is located between the fourth substrate and the fifth substrate; and
a drive circuit is disposed on a surface that is of the fourth substrate and/or the fifth substrate and that is close to the phase control layer, and the drive circuit is configured to drive, based on the image signal, liquid crystal molecules in the phase control layer to deflect, to change the polarization direction of the at least one part of the light source light emitted from the phase control layer.

In this way, the liquid crystal molecules are driven to deflect based on the image signal, so that phase delay can match the "dark region" and the "bright region" of the image. This helps improve the contrast of the image.

### BRIEF DESCRIPTION OF DRAWINGS

FIG. 1 is a diagram of a structure of a liquid crystal display according to Embodiment 1 of this application;
FIG. 2 is a diagram of a structure of a polarization grating apparatus in FIG. 1;
FIG. 3 is a diagram of a three-dimensional structure of a lens assembly in FIG. 2;
FIG. 4A is a diagram of a process in which the lens assembly in FIG. 3 acts on backlight;
FIG. 4B is a diagram of an optical path of backlight in an existing case in which there is no lens assembly;
FIG. 5 is a diagram of a planar structure of a polarization grating layer in FIG. 2;
FIG. 6 is a diagram of deflection angle distribution of liquid crystal molecules in each first polarization region and each second polarization region in FIG. 5;
FIG. 7 is a diagram of a process in which each first polarization region and each second polarization region in FIG. 6 act on backlight;
FIG. 8 is a diagram of a planar structure of a phase control layer in FIG. 2;
FIG. 9 is a diagram of a cross-sectional structure of the liquid crystal display in FIG. 1;
FIG. 10 is a diagram of a planar structure of a polarization grating layer according to Embodiment 2 of this application;
FIG. 11 is a diagram of a cross-sectional structure of a liquid crystal display according to Embodiment 2 of this application;
FIG. 12 is a diagram of a structure of a polarization grating layer according to Embodiment 3 of this application;
FIG. 13 is a diagram of a structure of a phase control assembly according to Embodiment 4 of this application; and
FIG. 14 is a diagram of a cross-sectional structure of a liquid crystal display according to Embodiment 4 of this application.

Description of reference signs of main components:

| | |
|---|---|
| liquid crystal display | 1 |
| liquid crystal display panel | 10 |
| lower polarizer | 11 |
| array substrate | 12 |
| liquid crystal layer | 13 |
| color film substrate | 14 |
| upper polarizer | 15 |
| backlight module | 20 |
| polarization grating apparatus | 30 |
| lens assembly | 31 |
| first substrate | 311 |
| lens | 312 |

| | |
|---|---|
| polarization grating assembly | 32 |
| second substrate | 321 |
| third substrate | 322 |
| polarization grating layer | 323, 423, 523 |
| polarization sublayer | 5231, 5232 |
| effective region | P0 |
| polarization region | A, B, E, F, G, H |
| liquid crystal molecule | M |
| phase control assembly | 33, 63 |
| fourth substrate | 331, 631 |
| fifth substrate | 332, 632 |
| drive circuit | 6311, 6321 |
| phase control layer | 333, 633 |
| phase control region | C, D, I, J, K |
| sub-control region | I1, I2, J1, J2, K1, K2 |
| backlight | L1 |
| left-handed circularly polarized light | L11 |
| right-handed circularly polarized light | L12 |
| light source light | L2 |
| image light | L3 |
| pixel region | P1, P2, P3 |
| first direction | X |
| second direction | Y |
| third direction | Z |

### DESCRIPTION OF EMBODIMENTS

The following describes embodiments of this application with reference to accompanying drawings in embodiments of this application.

### Embodiment 1

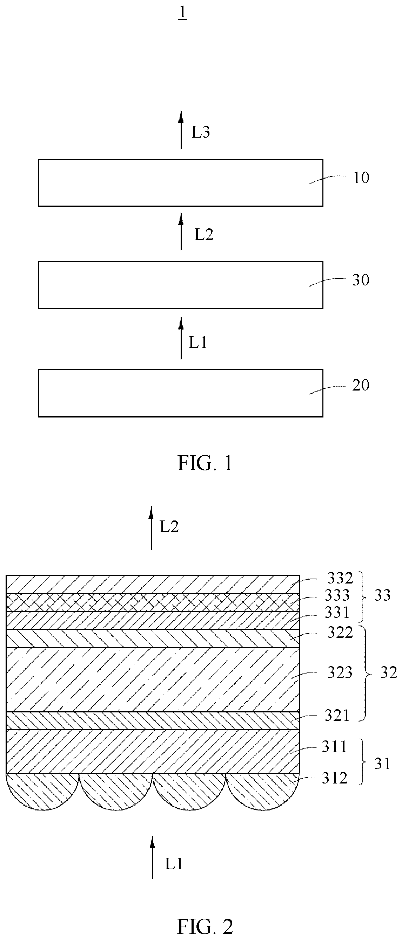

Refer to FIG. 1. A liquid crystal display 1 in this embodiment of this application is, for example, a television, a computer, a mobile phone, or a wearable product. In this embodiment, the liquid crystal display 1 includes a liquid crystal display panel 10, a backlight module 20, and a polarization grating apparatus 30 located between the liquid crystal display panel 10 and the backlight module 20. The backlight module 20 is configured to emit backlight L1. The polarization grating apparatus 30 is located on an optical path of the backlight L1, and is configured to modulate a polarization state of the backlight L1. Backlight emitted after being modulated by the polarization grating apparatus 30 is defined as light source light L2. The liquid crystal display panel 10 is located on an optical path of the light source light L2, and is configured to modulate the light source light L2 to emit image light L3 from a side that is of the liquid crystal display panel 10 and that is away from the polarization grating apparatus 30. The image light L3 is used to display an image.

Refer to FIG. 2. In this embodiment, the polarization grating apparatus 30 includes a lens assembly 31, a polarization grating assembly 32, and a phase control assembly 33 that are sequentially stacked. The backlight module 20 is located on a side that is of the lens assembly and that is away from the phase control assembly 33.

In this embodiment, only backlight L1 that is incident to a specific region on the polarization grating assembly 32 can be effectively used, and backlight L1 that is incident to a region other than the specific region on the polarization grating assembly 32 is lost. However, when the backlight L1 is emitted from the backlight module 20, the backlight L1 has a specific divergence angle. If the backlight L1 is emitted based on the optical path of the backlight L1, a part of the backlight L1 is lost. In this embodiment, the lens assembly 31 is located on the optical path of the backlight L1, and is configured to focus the backlight L1 to guide the backlight L1 to the specific region on the polarization grating assembly 32. Therefore, in this embodiment, utilization of the backlight L1 may be improved by using the lens assembly 31. This helps avoid a loss of a part of the backlight L1 with a large divergence angle.

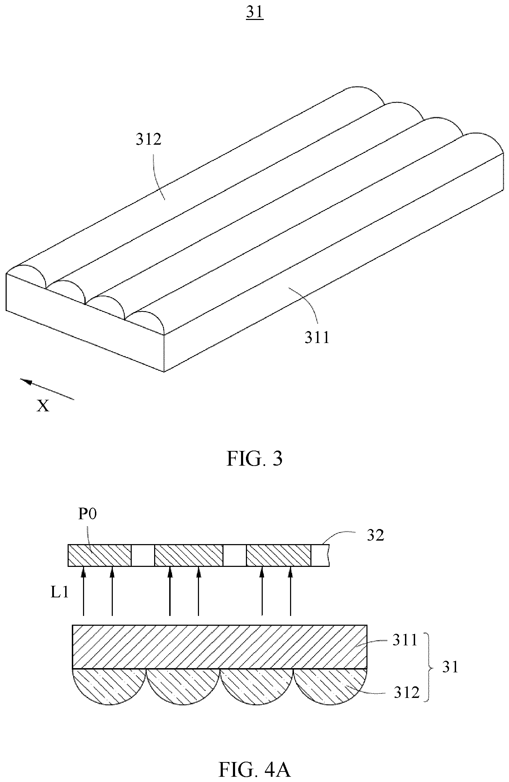

In this embodiment, the lens assembly 31 includes a first substrate 311 and a plurality of lenses 312 located on a same surface of the first substrate 311. In this embodiment, the first substrate 311 is made of glass. In another embodiment, the first substrate 311 may be made of another light-transmitting material. The first substrate 311 is configured to carry and fasten the plurality of lenses 312. Refer to FIG. 3. The lenses 312 have a same shape and size, each lens 312 is approximately a long strip with a convex surface, and the plurality of lenses 312 are closely arranged in parallel in a first direction X. Each lens 312 is configured to receive and focus a part of the backlight L1 to the polarization grating assembly 32, and each lens 312 is configured to focus the part of backlight L1 to a different region on the polarization grating assembly 32.

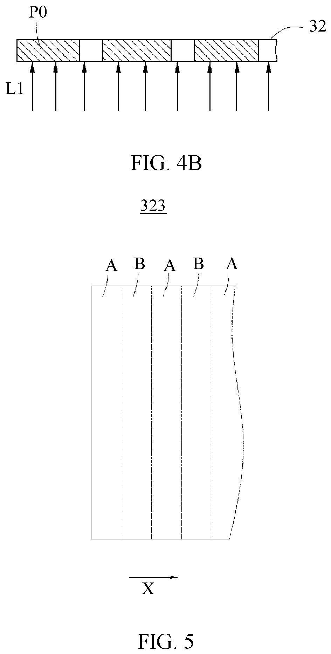

In this embodiment, a curvature radius of each lens 312 ranges from 0.05 mm to 2.5 mm (including endpoint values), and a refractive index ranges from 1.4 to 1.7 (including endpoint values). For example, the backlight L1 has a divergence angle of 20 degrees. As shown in FIG. 4A, when the backlight L1 passes through the lens assembly 31, the backlight L1 may be separately focused on an effective region P0 on the polarization grating assembly 32 for effective use. As shown in FIG. 4B, when the backlight L1 does not pass through the lens assembly 31, the backlight L1 is propagated in an original direction. A part of the backlight L1 is incident to the effective region P0. The other part is incident to a position outside the effective region P0, causing a loss of the backlight. Therefore, the lens assembly 31 in this embodiment helps improve the light utilization of the backlight L1.

Still refer to FIG. 2. The polarization grating assembly 32 includes a second substrate 321, a third substrate 322, and a polarization grating layer 323 located between the second substrate 321 and the third substrate 322. In this embodiment, the second substrate 321 and the third substrate 322 are made of glass. In another embodiment, the second substrate 321 and the third substrate 322 may be made of another light-transmitting material. In this embodiment, the second substrate 321 and the third substrate 322 are configured to jointly carry and fasten the polarization grating layer 323.

In this embodiment, a thickness of the polarization grating layer 323 is less than or equal to 10 µm.

In this embodiment, the first substrate 311 and the second substrate 321 are fastened in a bonding manner. In another embodiment, the first substrate 311 and the second substrate 321 may be a same structural layer. That is, in another embodiment, the plurality of lenses 312 and the polarization grating layer 323 are respectively located on two opposite surfaces of a same substrate. In this way, an overall thickness of the polarization grating apparatus is reduced. However, in this embodiment, the first substrate 311 and the second substrate 321 are separated, which helps simplify a manufacturing process of the polarization grating apparatus.

Refer to FIG. 5. The polarization grating layer 323 includes a plurality of first polarization regions A and a plurality of second polarization regions B. In this embodiment, a planar structure of the polarization grating layer 323 is a rectangle. Each first polarization region A and each second polarization region B are rectangular regions. Each first polarization region A and each second polarization region B have a same size and shape. The plurality of first polarization regions A and the plurality of second polarization regions B are arranged in parallel and alternately in the first direction X. In this embodiment, each lens 312 corresponds to only one first polarization region A or only one second polarization region B. In other words, a projection of each lens 312 on the polarization grating layer 323 at least partially overlaps only one first polarization region A or only one second polarization region B. In this embodiment, the projection of each lens 312 on the polarization grating layer 323 at least partially overlaps only one first polarization region A or only one second polarization region B. Each lens 312 is configured to guide a part of the backlight L1 to a corresponding polarization region A or a corresponding second polarization region B.

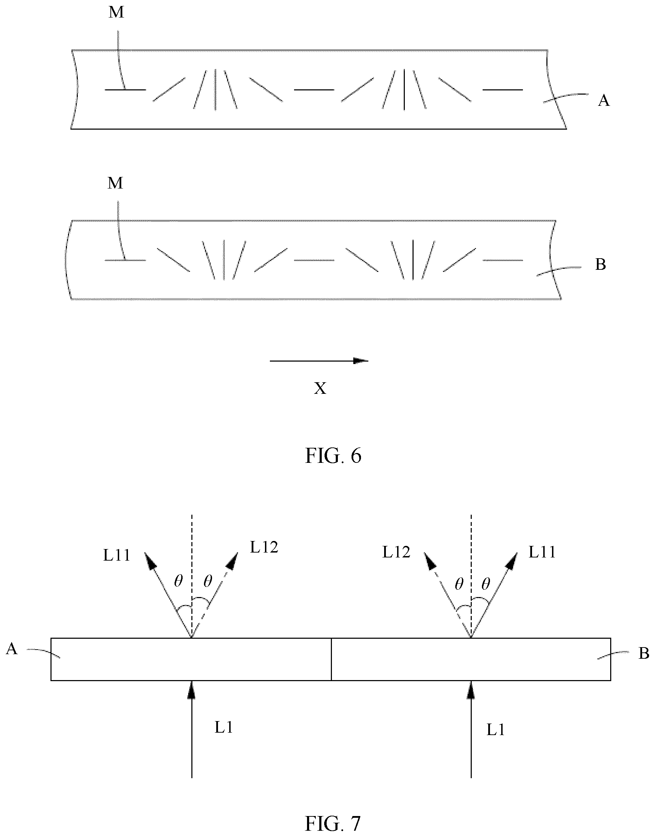

Refer to FIG. 6. There are a plurality of liquid crystal molecules M in each first polarization region A, and there are also a plurality of liquid crystal molecules M in each first polarization region B. A main difference between the first polarization region A and the second polarization region B lies in that, deflection angle distribution rules of liquid crystal molecules M in regions are different. Because the deflection angle distribution rules of the liquid crystal molecules M are different, when the backlight L1 is incident to the polarization grating layer 323, forms of light emitted from the first polarization region A and the second polarization region B are different.

For each first polarization region A, the plurality of liquid crystal molecules M are arranged in the first direction X. If a deflection angle of a first liquid crystal molecule M in the first direction X is defined as 0°, a deflection angle of a last liquid crystal molecule M in the first direction X is 360°. There is a specific included angle between every two adjacently arranged first liquid crystal molecules M, and included angles between any adjacently arranged liquid crystal molecules M are the same. In other words, for each first polarization region A, the plurality of liquid crystal molecules M in the first polarization region A separately deflect at specific angles in sequence in a counterclockwise direction in the first direction X, so that there is an included angle of 360° between two liquid crystal molecules M that are farthest from each other in the first direction X.

For each second polarization region B, the plurality of liquid crystal molecules M are arranged in the first direction X. A main difference from the first polarization region A lies in that, the plurality of liquid crystal molecules M separately deflect at specific angles in sequence in a clockwise direction in the first direction X, so that there is an included angle of 360° between two liquid crystal molecules M that are farthest from each other in the first direction X. That is, a main difference between the first polarization region A and the second polarization region B lies in that, the deflection angle distribution rules of the liquid crystal molecules M in the regions are different.

In this embodiment, the backlight L1 is natural light. Refer to FIG. 7. When the backlight L1 is incident to the first polarization region A, the first polarization region A emits left-handed circularly polarized light L11 and right-handed circularly polarized light L12. A straight line l perpendicular to the first polarization region A is defined, where the left-handed circularly polarized light L11 and the right-handed circularly polarized light L12 each are at an included angle θ with the straight line l, and the left-handed circularly polarized light L11 is at an included angle 2θ with the right-handed circularly polarized light L12. When the backlight L1 is incident to the second polarization region B, the second polarization region B also emits left-handed circularly polarized light L11 and right-handed circularly polarized light L12. A main difference between a function of the first polarization region A and a function of the second polarization region B on the backlight L1 lies in that, direction distribution of the left-handed circularly polarized light L11 and the right-handed circularly polarized light L12 emitted from the first polarization region A is exactly opposite to direction distribution of the left-handed circularly polarized light L11 and the right-handed circularly polarized light L12 emitted from the second polarization region B. That is, a direction of the left-handed circularly polarized light L11 emitted from the first polarization region A is the same as a direction of the right-handed circularly polarized light L12 emitted from the second polarization region B, and a direction of the right-handed circularly polarized light L12 emitted from the first polarization region A is the same as a direction of the left-handed circularly polarized light L11 emitted from the second polarization region B.

In this embodiment, a size of each polarization region (A or B) in the first direction X ranges from 100 µm to 500 µm (including endpoint values). One polarization region includes at least two arrangement cycles (deflection angles of liquid crystal molecule M from 0° to 360° are defined as one arrangement cycle), and a size of each arrangement cycle in the first direction X is at least 0.5 µm (including an endpoint value).

Still refer to FIG. 2. The phase control assembly 33 includes a fourth substrate 331, a fifth substrate 332, and a phase control layer 333 located between the fourth substrate 331 and the fifth substrate 332. In this embodiment, the fourth substrate 331 and the fifth substrate 332 are made of glass. In another embodiment, the fourth substrate 331 and the fifth substrate 332 may be made of another light-transmitting material. The fourth substrate 331 and the fifth substrate 332 are configured to carry and fasten the phase control layer 333. In another embodiment, the fourth substrate 331 and the third substrate 322 may be a same material layer. If the fourth substrate 331 and the third substrate 322 are a same material layer, a thickness of the material layer should meet a requirement for a distance between the phase control layer 333 and the polarization grating layer 323.

In this embodiment, a thickness of the phase control layer 333 meets: 0.1 mm<d<10 mm (including endpoint values). In this embodiment, if a refractive index of the first substrate is represented as n1, 1.3≤n1≤n2+/-0.1≤1.8, 1.3≤n2≤n3+/-0.1≤1.8, 1.3≤n3≤n4+/-0.1≤1.8, and 1.3≤n4≤n5+/-0.1≤1.7.

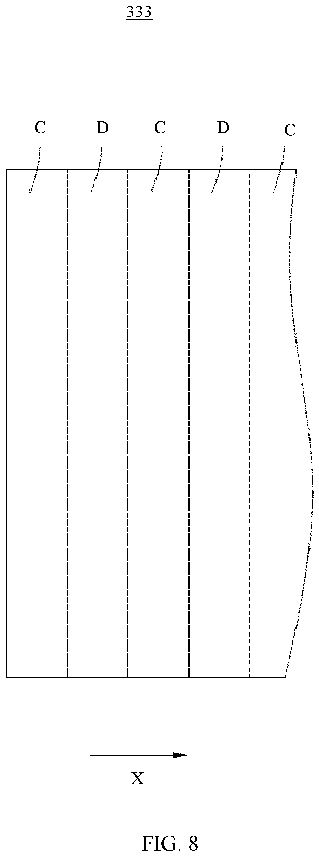

Refer to FIG. 8. In this embodiment, the phase control layer 333 is a 1/4 wave plate. The phase control layer 333 includes a plurality of first phase control regions C and a plurality of second phase control regions D. In this embodiment, a planar structure of the phase control layer 333 is a rectangle. Each first phase control region C and each second phase control region D are rectangular regions. Each first phase control region C and each second phase control region D have a same size and shape. The plurality of first phase control regions C and the plurality of second phase control regions D are arranged in parallel and alternately in the first direction X. Each first phase control region C and each second phase control region D are configured to perform phase delay on the received light.

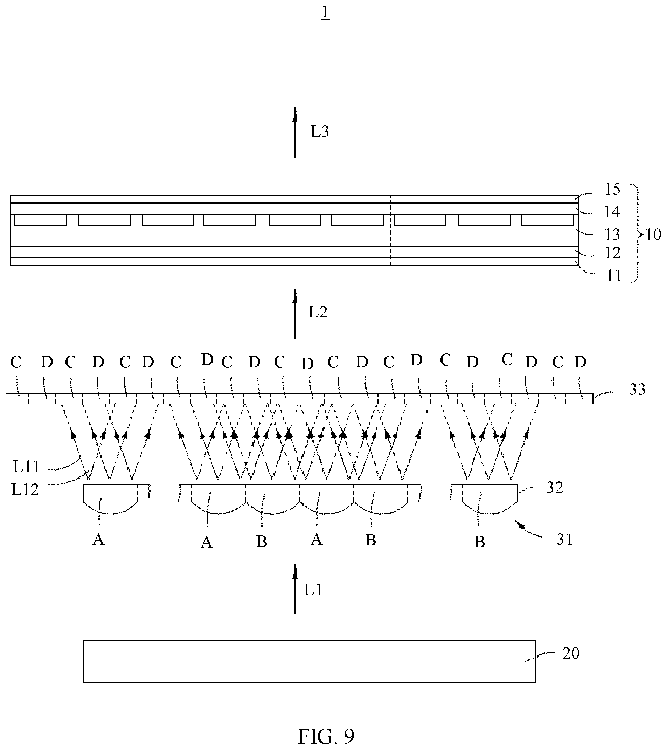

Refer to FIG. 9. In this embodiment, each first phase control region C is configured to receive left-handed circularly polarized light L11, and is configured to perform 3/4 phase delay on the left-handed circularly polarized light L11; and each second phase control region D is configured to receive right-handed circularly polarized light L12, and is configured to perform 1/4 phase delay on the right-handed circularly polarized light L12. After the left-handed circularly polarized light L11 and the right-handed circularly polarized light L12 are phase-modulated by the phase control layer 333, the left-handed circularly polarized light L11 and the right-handed circularly polarized light L12 are converted into linearly polarized light for emission. That is, the light source light L2 is linearly polarized light. In this embodiment, light source light L2 emitted from each first phase control region C and light source light L2 emitted from each second phase control region D has a same polarization direction.

In this way, after the polarization state of the backlight L1 is adjusted by the polarization grating apparatus 30, the backlight L1 is incident to the liquid crystal display panel 10 as the light source light L2, so that a polarization direction of the light source light L2 meets a requirement of the liquid crystal display panel 10, and the light source light L2 may all be used by the liquid crystal display panel 10. This avoids a problem in a conventional technology that some light is absorbed or reflected because polarization of the light does not meet the requirement of the liquid crystal display panel 10. Therefore, the polarization grating apparatus 30 in this embodiment helps improve the utilization of the backlight L1.

The liquid crystal display panel 10 includes a lower polarizer 11, an array substrate 12, a liquid crystal layer 13, a color film substrate 14, and an upper polarizer 15 that are sequentially stacked. The lower polarizer 11 is close to the backlight module 20 compared with the upper polarizer 15. The polarization direction of the light source light L2 is parallel to a polarization direction of the lower polarizer 11, that is, the light source light L2 may be transmitted from the lower polarizer 11 and modulated into the image light L3 by the liquid crystal display panel 10.

The following describes a working process of the liquid crystal display 1 with reference to FIG. 9.

The backlight module 20 emits the backlight L1, and the backlight L1 is natural light (non-polarized light). The lens assembly 31 receives the backlight L1, and each lens 312 in the lens assembly 31 is configured to focus and guide a part of the backlight L1 to a corresponding region (the first polarization region A or the second polarization region B) in the polarization grating layer 323. Each first polarization region A and each second polarization region B in the polarization grating layer 323 are configured to convert the received backlight L1 into the left-handed circularly polarized light L11 and the right-handed circularly polarized light L12 for emission. The left-handed circularly polarized light L11 emitted from the polarization grating layer 323 is incident to the first phase control region C in the phase control layer 333, and the right-handed circularly polarized light L12 emitted from the polarization grating layer 323 is incident to the second phase control region D in the phase control layer 333. The first phase control region C and the second phase control region D are configured to respectively perform different phase delay on the left-handed circularly polarized light L11 and the right-handed circularly polarized light L12, so that light emitted from the phase control regions at the phase control layer 333 is linearly polarized light having a same polarization direction, that is, the light source light L2. In addition, the polarization direction of the light source light L2 is parallel to the polarization direction of the lower polarizer 11 in the liquid crystal display panel 10. Therefore, almost all the light source light L2 may be transmitted from the lower polarizer 11. In other words, a penetration rate of the light source light L2 from the lower polarizer 11 is close to 100%. The light source light L2 transmitted to the liquid crystal display panel 10 is incident to the liquid crystal layer 13, and the array substrate 12 drives, based on an image signal, a liquid crystal in the liquid crystal layer 13 to deflect, to modulate the light source light L2. Light source light L2 modulated by the liquid crystal layer 13 is incident to the color film substrate 14, and is filtered by the color film substrate 14. Light emitted from the color film substrate 14 is filtered by the upper polarizer 15 and then becomes the image light L3. The image light L3 is emitted from a side that is of the liquid crystal display panel 10 and that is away from the backlight module 20. When the image light L3 is incident to human eyes, a user may observe the image from the side that is of the liquid crystal display panel 10 and that is away from the backlight module 20.

The liquid crystal display 1 in this application includes the polarization grating apparatus 30. The polarization grating apparatus 30 modulates at least one part of the backlight L1 into linearly polarized light (that is, the light source light L2) that is parallel to the polarization direction of the lower polarizer 11 of the liquid crystal display panel 10, so that almost all the light source light L2 (there may be a light loss caused by another factor rather than caused by different polarization directions) can be transmitted from the lower polarizer 11, thereby improving the light utilization of the backlight L1. In addition, the polarization grating apparatus 30 in this embodiment further includes the lens assembly 31. By using a convergence function of the lens assembly 31 on the backlight L1, even if the divergence angle of the backlight L1 is large (that is, non-collimation), the backlight L1 can be accurately guided to a specific region on the polarization grating assembly 32. This helps reduce a light loss of the backlight L1 and further improves the light utilization of the backlight L1.

Further, the polarization grating apparatus 30 in this embodiment further includes the first substrate 311, the second substrate 321, the third substrate 322, the fourth substrate 331, and the fifth substrate 332. The foregoing substrate helps improve overall mechanical strength of the polarization grating apparatus 30. A refractive index of each substrate is set to be within the foregoing range, which helps further improve the light utilization of the backlight L1.

In another embodiment, the polarization grating apparatus 30 in this application may alternatively be used in a radar. When the polarization grating apparatus 30 is used in the radar, light source light L2 is polarized light, and the light source light L2 has a smaller wavelength range, and is used to detect a distance between a target object and the radar in an environment or detect a three-dimensional structure of a target object in an environment.

### Embodiment 2

A difference between liquid crystal displays in this embodiment and in Embodiment 1 mainly lies in that, in a liquid crystal display in this embodiment, a polarization grating layer includes a plurality of (more than two) polarization region types. The following mainly describes the difference.

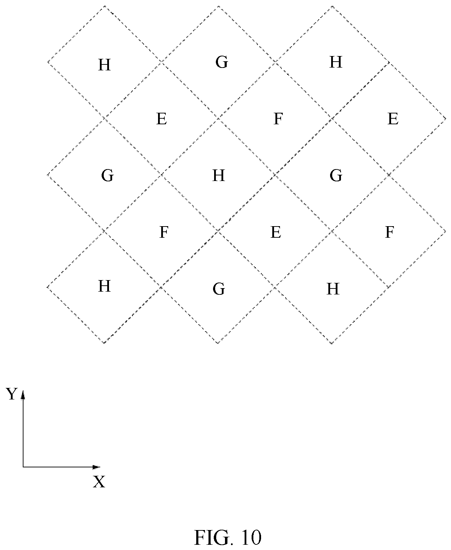

Refer to FIG. 10. A polarization grating layer 423 in this embodiment includes four polarization region types. That is, the polarization grating layer 423 includes a plurality of first polarization regions E, a plurality of second polarization regions F, a plurality of third polarization regions G, and a plurality of fourth polarization regions H. A quantity of first polarization regions E, a quantity of second polarization regions F, a quantity of third polarization regions G, and a quantity of fourth polarization regions H are the same. Each polarization region is configured to receive a part of backlight L1, and is configured to convert the part of backlight L1 into left-handed circularly polarized light L11 and right-handed circularly polarized light L12 for emission.

In this embodiment, a difference between the first polarization region E, the second polarization region F, the third polarization region G, and the fourth polarization region H mainly lies in that, liquid crystal deflection direction distribution rules in the first polarization region E, the second polarization region F, the third polarization region G, and the fourth polarization region H are different, so that directions of left-handed circularly polarized light L11 and right-handed circularly polarized light L12 emitted from the first polarization region E, the second polarization region F, the third polarization region G, and the fourth polarization region H are different.

As shown in FIG. 10, in this embodiment, each first polarization region E, each second polarization region F, each third polarization region G, and each fourth polarization region H are squares with a same area. In a first direction X, the first polarization region E and the second polarization region F are alternately arranged, and a side of each first polarization region E and a side of each second polarization region F each are at an angle of 45° with the first direction X. In a second direction Y perpendicular to the first direction X, the third polarization region G and the fourth polarization region H are alternately arranged, and a side of each third polarization region G and a side of each fourth polarization region H each are at an angle of 45° with the first direction X. In this embodiment, a first polarization region E, a second polarization region F, a third polarization region G, and a fourth polarization region H that are adjacently arranged jointly form a square.

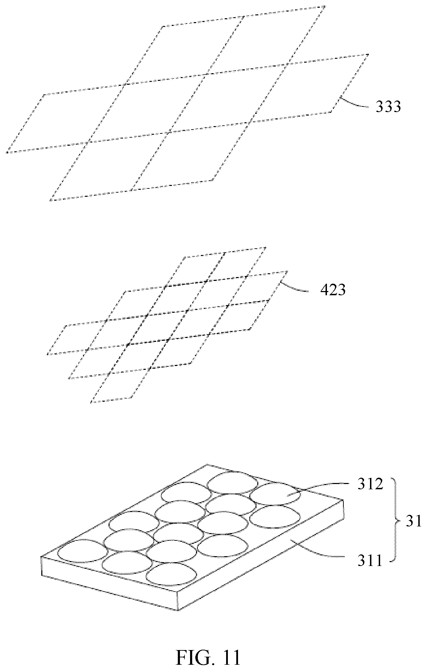

Refer to both FIG. 10 and FIG. 11. In this embodiment, corresponding to an arrangement manner of the polarization regions at the polarization grating layer 423, a plurality of lenses 312 in a lens assembly 31 are also arranged in a one-to-one correspondence with the plurality of first polarization regions E, the plurality of second polarization regions F, the plurality of third polarization regions G, and the plurality of fourth polarization regions H. In other words, the lenses 312 in the lens assembly 31 are arranged into an array including a plurality of rows and a plurality of columns, where a row direction and a column direction each are at an angle of 45° with the first direction X. A projection of each lens 312 in the lens assembly 31 on the polarization grating layer 423 at least partially overlaps only one polarization region.

In this embodiment, corresponding to the arrangement manner of the polarization regions at the polarization grating layer 423, a plurality of phase control regions in a phase control layer 333 are also arranged in a one-to-one correspondence with the plurality of first polarization regions E, the plurality of second polarization regions F, the plurality of third polarization regions G, and the plurality of fourth polarization regions H. That is, left-handed circularly polarized light L11 or right-handed circularly polarized light L12 emitted from the first polarization region E, the second polarization region F, the third polarization region G, and the fourth polarization region H that are adjacently arranged is focused on a same phase control region at the phase control layer 333.

In Embodiment 1, because the polarization grating layer includes two types of polarization regions that are alternately arranged in the first direction X, the light source light emitted from the polarization grating layer is mainly symmetrical and uniform in the first direction X. However, in this embodiment, the polarization grating layer 423 includes four types of polarization regions (E, F, G, and H), so that light source light L2 emitted from the polarization grating layer 423 is symmetrical and uniform in both the first direction X and the second direction Y

In another embodiment, the polarization grating layer may include another quantity of polarization region types, for example, include three types of polarization regions. If a quantity of polarization region type changes, a quantity and an arrangement manner of lenses and phase control regions change correspondingly. Deflection angle distribution rules of liquid crystal molecules in different types of polarization regions are different. Therefore, the liquid crystal display in this embodiment can implement all beneficial effect of the liquid crystal display 1 in Embodiment 1. On this basis, in the liquid crystal display in this embodiment, the polarization grating layer 423 includes a plurality of (more than two) polarization region types, which helps improve symmetry and uniformity of the light source light, thereby improving effect of displaying an image by the liquid crystal display.

### Embodiment 3

A difference between a liquid crystal display in this embodiment and the liquid crystal display 1 in Embodiment 1 mainly lies in that, a polarization grating layer in the liquid crystal display in this embodiment is a multi-layer structure. The following mainly describes the difference.

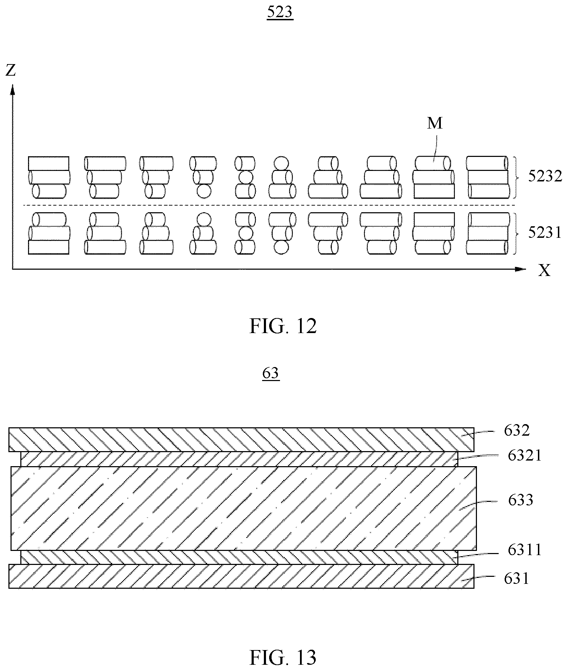

Refer to FIG. 12. A polarization grating layer 523 in this embodiment includes a first polarization sublayer 5231 and a second polarization sublayer 5232 that are sequentially stacked. The first polarization sublayer 5231 and the second polarization sublayer 5232 may be configured to convert backlight L1 into left-handed circularly polarized light L11 and right-handed circularly polarized light L12. In this embodiment, a wavelength of the backlight L1 ranges from 380 nm to 780 nm (including endpoint values). Thicknesses of each polarization sublayer 5231 and the second polarization sublayer 5232 each range from 1 µm to 5 µm (including endpoint values), for example, the thickness is 1.833 µm. A total thickness of the polarization grating layer 323 is less than or equal to 10 µm.

The first polarization sublayer 5231 and the second polarization sublayer 5232 each include a plurality of liquid crystal molecules M. The plurality of liquid crystal molecules M at the first polarization sublayer 5231 and the plurality of liquid crystal molecules M at the second polarization sublayer 5232 each have a deflection angle distribution rule. In this embodiment, deflection angle distribution rules of liquid crystal molecules M at the first polarization sublayer 5231 and the second polarization sublayer 5232 are different.

As shown in FIG. 12, a third direction Z that is perpendicular to a first direction X and a second direction Y is defined. The Liquid crystal molecules M at the first polarization sublayer 5231 and the second polarization sublayer 5232 have rotation trends in the third direction Z, and the rotation trends of the liquid crystal molecules M at the first polarization sublayer 5231 and the second polarization sublayer 5232 in the third direction Z are opposite. That is, the liquid crystal molecule M at the first polarization sublayer 5231 rotates counterclockwise in the third direction Z, and the liquid crystal molecule M at the second polarization sublayer 5232 rotates clockwise in the third direction Z. In this embodiment, a maximum rotation angle of the liquid crystal molecule M at each of the first polarization sublayer 5231 and the second polarization sublayer 5232 in the third direction Z is 70°.

The thicknesses of the first polarization sublayer 5231 and the second polarization sublayer 5232 and the deflection angle distribution rule of the liquid crystal molecule M are set, so that overall polarization efficiency of the polarization grating layer 523 for the backlight L1 with a wavelength from 380 nm to 780 nm is high. For backlight L1 with a different wavelength range, a quantity and thicknesses of polarization sublayers and a deflection angle distribution rule of liquid crystal molecules may be adjusted to improve polarization efficiency of the backlight L1.

In a changed embodiment, each polarization sublayer (the first polarization sublayer 5231 or the second polarization sublayer 5232) may include a plurality of polarization region types as described in Embodiment 2. In this way, symmetry and uniformity of light emitted from each polarization sublayer are improved, and effect of displaying an image by a liquid crystal display panel is improved. In another embodiment, the polarization grating layer 523 may include another quantity of polarization sublayers. Therefore, the liquid crystal display in this embodiment can implement all beneficial effect of the liquid crystal display 1 in Embodiment 1. On this basis, in the liquid crystal display in this embodiment, the polarization grating layer 523 is disposed to be of a multi-layer structure, which helps improve polarization state conversion efficiency of the backlight L1 when a wavelength range of the backlight L1 is large. In addition, if each polarization sublayer includes a plurality of polarization region types as described in Embodiment 2, the effect of displaying an image by the liquid crystal display panel is further improved.

### Embodiment 4

A difference between a liquid crystal display in this embodiment and the liquid crystal display 1 in Embodiment 1 mainly lies in that, a structure and a function of a phase control assembly in the liquid crystal display in this embodiment are different from a structure and a function of the phase control assembly 33 in Embodiment 1. The following mainly describes the difference.

Refer to FIG. 13. In this embodiment, a phase control assembly 63 includes a fourth substrate 631, a fifth substrate 632, and a phase control layer 633 located between the fourth substrate 631 and the fifth substrate 632.

In this embodiment, the phase control layer 633 is a liquid crystal layer, and includes a plurality of liquid crystal molecules. In this embodiment, a thickness of the phase control layer 333 is less than or equal to 0.1 mm. In this embodiment, drive circuits 6311 and 6321 are respectively disposed on the fourth substrate 631 and the fifth substrate 632. The drive circuits 6311 and 6321 are configured to output a drive signal to the phase control layer 633 based on an image signal, to drive the liquid crystal molecule in the phase control layer 633 to deflect by a specific angle. When the deflection angle of the liquid crystal molecule is different, phase delay performed by the phase control layer 633 on received light is different. In another embodiment, the drive circuit 6311 and the drive circuit 6321 may alternatively be located only on one of the fourth substrate 631 and the fifth substrate 632. This is not limited in this application. That is, the phase control assembly 63 in this embodiment does not have a fixed structure as described in Embodiment 1, and the deflection angle of the liquid crystal molecule in this embodiment is variable. Therefore, the phase control assembly 63 controls a light phase in a manner that is adjustable based on the image signal. The drive signal is a voltage signal. A voltage value of the drive signal is changed, so that the deflection angle of the liquid crystal molecule in the phase control layer 633 may be changed, to change phase delay performed by the phase control layer 633 on light.

In this embodiment, light source light L2 emitted from the phase control layer 633 is also linearly polarized light. However, the drive signal may be changed, so that phase delay performed by different regions of the phase control layer 633 on light is different. In this way, polarization directions of light source light L2 emitted from the different regions of the phase control layer 633 are different. If a polarization direction of the light source light L2 is parallel to a polarization direction of a lower polarizer, almost all the light source light L2 may be transmitted from the lower polarizer. If a polarization direction of the light source light L2 is perpendicular to a polarization direction of a lower polarizer, almost all the light source light L2 is blocked by the lower polarizer and cannot be incident to a liquid crystal display panel. If there is another included angle between a polarization direction of the light source light L2 and a polarization direction of a lower polarizer, a part of the light source light L2 may be transmitted from the lower polarizer to a liquid crystal display panel, and an amount of light source light L2 that can be transmitted varies based on the included angle.

For the liquid crystal display panel, an image displayed on the liquid crystal display panel may have a "bright region" and a "dark region". Generally, when a bright-dark contrast of the image is obvious, a contrast of the image is improved, and display effect is better. However, the liquid crystal display panel may have a problem such as light leakage, which reduces the contrast of the displayed image. In this embodiment, an amount of light source light L2 that is incident from the phase control assembly 63 to the liquid crystal display panel may be controlled, to cooperate with the "bright region" and the "dark region" of the image displayed on the liquid crystal display panel. For example, in a region that is of the phase control assembly 63 and that corresponds to the "bright region" of the image, the polarization direction of the light source light L2 is controlled to be parallel to the polarization direction of the lower polarizer, so that much light source light L2 is transmitted to the liquid crystal display panel. In a region that is of the phase control assembly 63 and that corresponds to the "dark region" of the image, the polarization direction of the light source light L2 is controlled to be perpendicular to a polarization direction of a lower polarizer 11, to prevent the light source light L2 from being transmitted to a liquid crystal display panel 10.

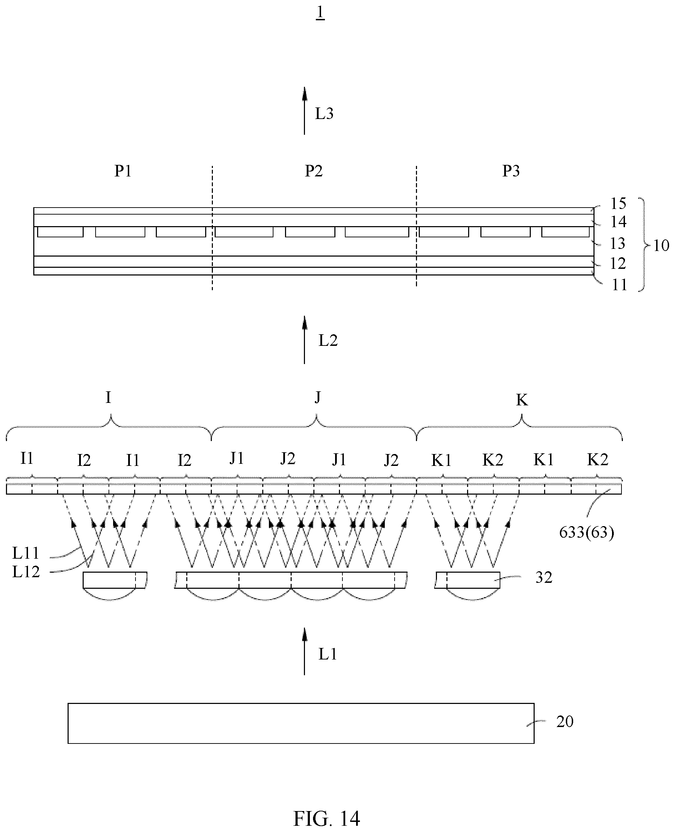

A case shown in FIG. 14 is used as an example. A horizontal direction in FIG. 14 is defined as the polarization direction of the lower polarizer 11, and a dashed arrow in FIG. 14 represents the polarization direction of the light source light L2 emitted from the phase control assembly 63. The image includes a first pixel region P1, a second pixel region P2, and a third pixel region P3, where the first pixel region P1 has highest luminance, and the third pixel region P3 has lowest luminance. Corresponding to the pixel regions (P1, P2, and P3), the phase control layer 633 includes a first phase control region I, a second phase control region J, and a third phase control region K.

The first phase control region I corresponds to the first pixel region P1. A polarization direction of light source light L2 emitted from the first phase control region I is the same as the polarization direction of the lower polarizer 11, and almost all of the light source light L2 may be transmitted from the lower polarizer 11 and incident to the first pixel region P1. The second phase control region J corresponds to the second pixel region P2. A polarization direction of light source light L2 emitted from the second phase control region J is at an acute angle with the polarization direction of the lower polarizer 11, and a part of the light source light L2 may be transmitted from the lower polarizer 11 and incident to the second pixel region P2. The third phase control region K corresponds to the third pixel region P3. A polarization direction of light source light L2 emitted from the third phase control region K is perpendicular to the polarization direction of the lower polarizer 11, and almost all of the light source light L2 is blocked by the lower polarizer 11 and cannot be incident to the third pixel region P3.

Specifically, in this embodiment, the first phase control region I includes a plurality of (only two are shown in FIG. 14) first sub-control regions I1 and a plurality of (only two are shown in FIG. 14) second sub-control regions I2. For an arrangement manner of the plurality of first sub-control regions I1 and the plurality of second sub-control regions I2, refer to FIG. 7. Each first sub-control region I1 in the first phase control region I is configured to receive right-handed circularly polarized light L12 emitted from a polarization grating assembly 32 and perform 3/4 phase delay. Each second sub-control region I2 in the first phase control region I is configured to receive left-handed circularly polarized light L11 emitted from the polarization grating assembly 32 and perform 1/4 phase delay. In this way, the light source light L2 emitted from the first phase control region I is linearly polarized light with a same polarization direction as the lower polarizer 11.

The second phase control region J includes a plurality of (only two shown in FIG. 14) first sub-control regions J1 and a plurality of (only two shown in FIG. 14) second sub-control regions J2. For an arrangement manner of the plurality of first sub-control regions J1 and the plurality of second sub-control regions J2, refer to FIG. 7. Each first sub-control region J1 in the second phase control region J is configured to receive the right-handed circularly polarized light L12 emitted from the polarization grating assembly 32 and perform 3/8 phase delay. Each second sub-control region J2 in the second phase control region J is configured to receive the left-handed circularly polarized light L11 emitted from the polarization grating assembly 32 and perform 5/8 phase delay. In this way, the light source light L2 emitted from the second phase control region J is linearly polarized light at an acute angle with the polarization direction of the lower polarizer 11.

The third phase control region K includes a plurality of (only two shown in FIG. 14) first sub-control regions K1 and a plurality of (only two shown in FIG. 14) second sub-control regions K2. For an arrangement manner of the plurality of first sub-control regions K1 and the plurality of second sub-control regions K2, refer to FIG. 7. Each first sub-control region K1 in the third phase control region K is configured to receive the left-handed circularly polarized light L11 emitted from the polarization grating assembly 32 and perform 3/4 phase delay. Each second sub-control region K2 in the third phase control region K is configured to receive the right-handed circularly polarized light L12 emitted from the polarization grating assembly 32 and perform 1/4 phase delay. In this way, the light source light L2 emitted from the third phase control region K is linearly polarized light perpendicular to the polarization direction of the lower polarizer 11.

The liquid crystal display in this embodiment can implement all beneficial effect described in Embodiment 1. On this basis, in this embodiment, phase delay performed by the phase control layer 633 on light is adjustable. This helps improve the contrast of the image displayed by the liquid crystal display.

Further, in the liquid crystal display in this embodiment, a polarization grating layer may also be as described in Embodiment 2 or Embodiment 3. In this way, all beneficial effect described in Embodiment 2 or Embodiment 3 can be implemented.

A person of ordinary skill in the art should be aware that the foregoing implementations are merely used to describe the present invention, but are not intended to limit the present invention. Appropriate modifications and variations made to the foregoing embodiments shall fall within the protection scope of the present invention provided that the modifications and variations fall within the essence and spirit of the present invention.

## Claims

1. A polarization grating apparatus, comprising a lens assembly, a polarization grating assembly, and a phase control assembly that are sequentially stacked, wherein
the lens assembly comprises a first substrate and a plurality of lenses fastened on a same surface of the first substrate, the lens assembly is configured to receive backlight, and each lens is configured to guide a part of the backlight to the polarization grating assembly;
the polarization grating assembly is configured to: convert the backlight into left-handed circularly polarized light and right-handed circularly polarized light for emission; and
the phase control assembly is configured to receive the left-handed circularly polarized light and the right-handed circularly polarized light, and is configured to convert the left-handed circularly polarized light and the right-handed circularly polarized light into light source light for emission.

2. The polarization grating apparatus according to claim 1, wherein the plurality of lenses are respectively configured to guide the backlight to different regions on the polarization grating assembly.

3. The polarization grating apparatus according to claim 1 or 2, wherein each lens is in a strip shape, and the plurality of lenses are arranged parallel to each other in a first direction.

4. The polarization grating apparatus according to claim 1 or 2, wherein the plurality of lenses are arranged into a lens array comprising a plurality of rows and a plurality of columns.

5. The polarization grating apparatus according to claim 3 or 4, wherein the polarization grating assembly comprises a polarization grating layer, the polarization grating layer comprises a plurality of liquid crystal molecules, and at least some of the liquid crystal molecules have different deflection angles, so that the polarization grating layer is configured to: convert the backlight into the left-handed circularly polarized light and the right-handed circularly polarized light for emission.

6. The polarization grating apparatus according to claim 5, wherein the polarization grating layer comprises a plurality of polarization regions, each lens corresponds to one of the polarization regions, each lens is configured to guide a part of the backlight to the corresponding polarization region, and each polarization region is configured to: convert the received backlight into the left-handed circularly polarized light and the right-handed circularly polarized light for emission.

7. The polarization grating apparatus according to claim 6, wherein a projection of each lens on the polarization grating layer at least partially overlaps the corresponding polarization region.

8. The polarization grating apparatus according to claim 6 or 7, wherein the plurality of polarization regions comprise a plurality of first polarization regions and a plurality of second polarization regions, directions of left-handed circularly polarized light emitted from the plurality of first polarization regions are different from directions of left-handed circularly polarized light emitted from the plurality of second polarization regions, and directions of right-handed circularly polarized light emitted from the plurality of first polarization regions are different from directions of right-handed circularly polarized light emitted from the plurality of second polarization regions.

9. The polarization grating apparatus according to any one of claims 6 to 8, wherein a direction of left-handed circularly polarized light emitted from each first polarization region is the same as a direction of right-handed circularly polarized light emitted from each second polarization region, and a direction of right-handed circularly polarized light emitted from each first polarization region is the same as a direction of left-handed circularly polarized light emitted from each second polarization region.

10. The polarization grating apparatus according to claim 8 or 9, wherein a deflection angle distribution rule of liquid crystal molecules in each first polarization region is different from a deflection angle distribution rule of liquid crystal molecules in each second polarization region.

11. The polarization grating apparatus according to any one of claims 6 to 10, wherein the polarization grating layer comprises a plurality of polarization sublayers that are sequentially stacked, each polarization sublayer comprises a plurality of polarization regions, each polarization sublayer is configured to convert the backlight into the left-handed circularly polarized light and the right-handed circularly polarized light, and a deflection angle distribution rule of liquid crystal molecules at each polarization sublayer is different.

12. The polarization grating apparatus according to any one of claims 5 to 11, wherein the polarization grating layer and the plurality of lenses are respectively located on two opposite surfaces of the first substrate.

13. The polarization grating apparatus according to any one of claims 5 to 11, wherein the polarization grating assembly comprises a second substrate and a third substrate; the polarization grating layer is located between the second substrate and the third substrate, so that the polarization grating layer is fastened and supported; and the second substrate is fastened to the first substrate.

14. The polarization grating apparatus according to any one of claims 1 to 13, wherein the phase control assembly comprises a phase control layer, and the phase control layer is configured to: perform phase delay on the left-handed circularly polarized light or the right-handed circularly polarized light to convert the light into the light source light for emission.

15. The polarization grating apparatus according to claim 14, wherein the phase control layer is a wave plate.

16. The polarization grating apparatus according to claim 14, wherein the phase control layer is a liquid crystal layer comprising a plurality of liquid crystal molecules.

17. The polarization grating apparatus according to any one of claims 14 to 16, wherein the phase control layer comprises a plurality of first phase control regions and a plurality of second phase control regions, each first phase control region is configured to receive the left-handed circularly polarized light, each second phase control region is configured to receive the right-handed circularly polarized light, and the first phase control region and the second phase control region are configured to perform different phase delay on the received light.

18. The polarization grating apparatus according to claim 17, wherein when the phase control layer is the liquid crystal layer, a polarization state of the light source light emitted from each first phase control region and each second phase control region is adjustable.

19. The polarization grating apparatus according to claim 18, wherein the phase control assembly further comprises a fourth substrate and a fifth substrate, and the phase control layer is located between the fourth substrate and the fifth substrate; and a drive circuit is disposed on a surface that is of the fourth substrate and/or the fifth substrate and that is close to the phase control layer, and the drive circuit is configured to drive the plurality of liquid crystal molecules in the phase control layer to deflect, to change a polarization direction of at least one part of the light source light.

20. The polarization grating apparatus according to any one of claims 1 to 19, wherein the light source light is linearly polarized light and is used to display an image.

21. A liquid crystal display, comprising:
a backlight module, configured to emit backlight;
a polarization grating apparatus, located in an optical path of the backlight, wherein the polarization grating apparatus is according to any one of claims 1 to 18, and light source light is a linearly polarized light; and
a liquid crystal display panel, located on an optical path of the light source light, and configured to modulate the light source light based on an image signal to display an image.

22. The liquid crystal display according to claim 21, wherein the liquid crystal display panel comprises a lower polarizer, and a polarization direction of at least one part of the light source light is parallel to a polarization direction of the lower polarizer;
a polarization direction of at least one part of the light source light is perpendicular to a polarization direction of the lower polarizer; or
a polarization direction of at least one part of the light source light and a polarization direction of the lower polarizer form an acute angle.

23. The liquid crystal display according to claim 21 or 22, wherein the phase control assembly further comprises a fourth substrate and a fifth substrate, and a phase control layer is located between the fourth substrate and the fifth substrate; and
a drive circuit is disposed on a surface that is of the fourth substrate and/or the fifth substrate and that is close to the phase control layer, and the drive circuit is configured to drive, based on the image signal, liquid crystal molecules in the phase control layer to deflect, to change the polarization direction of the at least one part of the light source light emitted from the phase control layer.
